# EUROPEAN PATENT SPECIFICATION

(11) **EP 2 261 107 B1**
(45) Date of publication and mention of the grant of the patent: **27.06.2012**
(21) Application number: 10164422.7
(22) Date of filing: 31.05.2010
(51) Int. Cl.: B62D 33/063

(54) **Work machine cab**
Arbeitsmaschinenkabine
Cabine de machine de travail

(30) Priority: 01.06.2009 FI 20095607
(43) Date of publication of application: 15.12.2010
(73) Proprietor: NTcab Oy, 85500 Nivala (FI)
(72) Inventor: Pätsi, Esa, 85500 Nivala (FI)
(74) Representative: Niemi, Hakan Henrik

(56) References cited:
- US-A- 3 252 546
- US-A- 3 675 966

## Description

### BACKGROUND OF THE INVENTION

The present invention relates to a work machine cab comprising wall, floor and roof structures enclosing a cabin space, whereby the work machine cab may be subjected to a substantially vertical linear movement by a lifting unit associated therewith, which lifting unit is attached with at least one securing means to a movable or immovable carriage abutting thereto or to a separate structure therein, which lifting unit comprises at least one guide bar and at least one actuator so as to move the work machine cab. Such a cab is utilized, for instance, as a cabin in a loader for timber-transporting vehicles in order to improve the driver's working conditions.

It is previously known to manufacture these cabs which have long since replaced, for instance, working seats that are used in loaders and that are completely exposed to open air. Some significant drawbacks, however, are still associated with these prior art work machine cabs protecting against environmental effects. Consequently, their attachment to loader structures is considerably cumbersome, requiring lifting units of heavy structure, which reduce the payload capacity of the truck. Mounting of the lifting unit, on one hand, onto the work machine and, on the other hand, onto the loader, involves a large number of working steps, which make the mounting expensive to perform.

There is also known linearly movable cabs according to the publications US 3,252,546 and US 3.675.966 which document is taken as basis for the preamble features of independent claim 1. The constructions according to these publications require either lifting units in all the cab corners or frame portions on several sides of the cab so as to stabilize the vertical movement of the cab. Simultaneously these constructional requirements limits the applicability of the lifting equipment to different work machines where space is limited.

### BRIEF DESCRIPTION OF THE INVENTION

The object of the present invention is thus to provide a solution whereby the problems resulting from the prior art drawbacks could be solved in a novel manner.

This is achieved by a work machine cab having the characteristics defined in claim 1 in accordance with this invention.

The preferred embodiments of the invention are disclosed in the dependent claims.

In the specification, the terms determining the position, such as "in its upper position" and "in its lower position" illustrate features of the invention in directions relative to the work machine cab as shown in the attached drawings.

The invention is based on the idea that, unlike previously, the lifting unit may be arranged as an integral part of the wall structure of the work machine cab. Integration of the lifting unit with the wall structure of the work machine cab reduces considerably working steps in manufacturing and mounting. In addition, the present solution substantially simplifies and expedites the mounting of the work machine cab onto a loader on a truck, for instance. Instead of being necessary to mount support and securing structures required by the lifting unit to the work machine cab during manufacture, the lifting unit may be utilized as a part of the frame structure of the work machine cab. Because the lifting unit is ready-fitted in the work machine cab during manufacture, there is no need to take action for mounting it on the side of the work machine cab, as has been done previously, but it will suffice that the lifting unit be attached by a few simple operations with securing means thereof to the structures of the truck, for instance to the loader thereof or to a vertical pillar supporting it.

Other considerable advantages are also achieved by means of the invention. So, for instance, the integration of the lifting unit with the wall structure of the work machine cab reduces the need for space previously required between the work machine cab and the loader. This cleared space may now be utilized, for instance, for making the cab larger without a risk of exceeding the statutory total width of the truck. Because integration allows simplification of necessary support structures, considerable savings in construction material are also achieved. Naturally, this saving is of economical importance in the manufacture of the work machine cab, but in particular, it is of importance as the loading capacity of the truck becomes larger in accordance with the reduced weight caused by less material.

As the lifting unit constitutes part of the wall structure of the work machine cab, there is a possibility, unlike previously, that the wall on the side of the lifting unit is utilized for providing a window opening therein. A window opening of this kind may be utilized by the driver, because the lifting unit of the invention withdraws from the window opening as a result of the lifting movement. This both improves the work ergonomics in the cabin space and increases the occupational safety in the work machine cab. Because the addition of the window opening widens the driver's visual field range from the left side up to the right side of the work machine cab, unlike previously, the work machine cabs need not be manufactured such that they would be positioned separately on the right side or the left side of the truck, but from the same work machine cab it is possible to control the whole visual field required.

The work machine cab of the invention also reduces the need for maintenance. By integrating the lifting unit with the wall structure, the lifting unit will be better protected against fouling and impacts than previously. Naturally, this also increases the operational reliability of the work machine cab, which in turn increases the effective working hours of the truck.

Other advantages provided by the invention are disclosed in the following in connection with the detailed description of the particular embodiments.

### BRIEF DESCRIPTION OF THE DRAWINGS

In the following, a preferred embodiment of the invention will be described in greater detail, with reference to the attached drawing, in which
Figure 1 is a schematic axonometric view of a work machine cab of the invention in its lower position;
Figure 2 shows the work machine cab of Figure 1 in its upper position;
Figure 3 shows the work machine cab of Figure 1 as secured to a pillar of a loader in the truck;
Figure 4 shows a schematic horizontal section of a wall in the work machine cab of the invention at A - A in Figure 1, the work machine cab being in its lower position;
Figure 5 shows a schematic vertical section of a wall in the work machine cab of the invention at B - B in Figure 2, the work machine cab being in its upper position; and
Figure 6 shows a schematic horizontal section of a wall in the work machine cab of the invention at C in Figure 4.

### DETAILED DESCRIPTION OF A PREFERRED EMBODIMENT

In the present figures, the work machine cab is not shown in scale, but the figures are schematic, illustrating the principle of the structure and operation of a preferred embodiment. Thus, structural parts indicated by reference numerals in the accompanying figures correspond to the structural parts with like reference numerals in this specification.

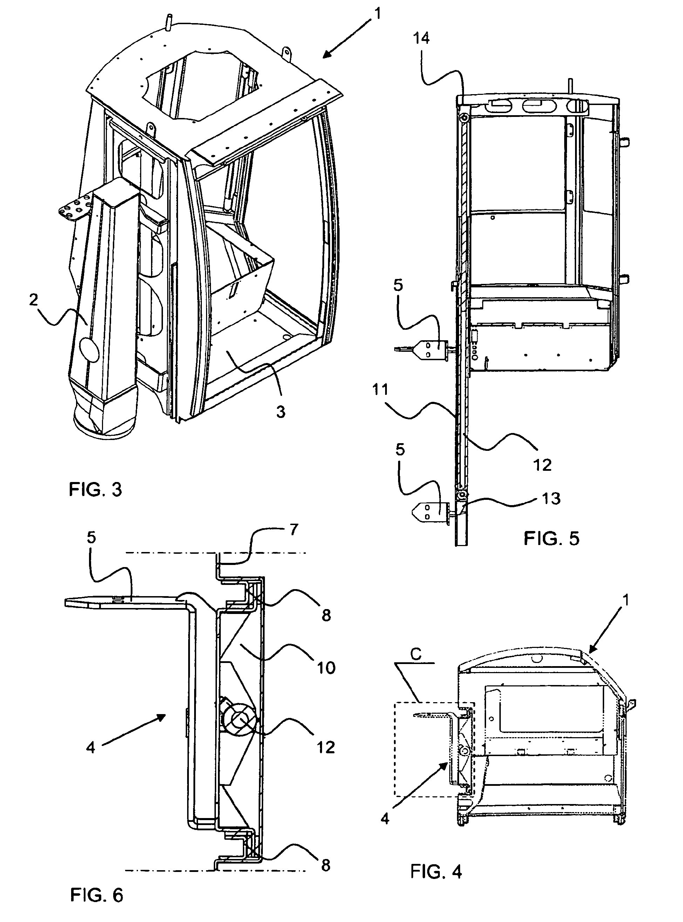

So, Figure 3 shows an embodiment of the present work machine cab 1 as secured, by way of example, to a vertical pillar 2 of a loader in a truck, the figure showing just the vertical pillar with the work machine cab. This kind of a work machine cab may naturally be utilized in any kind of movable or immovable carriage as well as in said truck. The work machine cab in the form shown in the figure comprises a cabin space 3 furnished and equipped in the manner known per se, which will not be described in greater detail in this connection. This cabin space is surrounded, as usual, on six sides by wall, floor and roof structures, which are provided with necessary window surfaces and doors. For the sake of simplicity, in this connection the figures only show the main frame structures of the work machine cab, and consequently, apart from the earlier mentioned furnishings and equipment, also windows, doors and optional furnishings and equipment to be mounted on the outer surface of the work machine cab, are omitted in the figures.

The work machine cab 1 is arranged to be controllable in a translational movement, more precisely, in a substantially vertical linear movement, with a lifting unit 4 associated therewith. The linear movement is produced in relation to the carriage abutted on the work machine cab or a separate structure thereof, to which the lifting unit is attached with at least one securing means 5 in accordance with Figure 3. These securing means are also visible in other figures, in which the work machine cab is shown detached from its operating environment.

The lifting unit 4 comprises at least one guide bar 8 integrated with a side wall 7 as shown in the figures. In the present structure there are two guide bars consisting of, for instance, linear guide bars opposite one another as shown in Figure 6. These linear guide bars preferably constitute part of the frame structure of the work machine cab 1, bracing the structure of the work machine cab, but just as well the linear guide bars may be attached to the frame structure of the work machine cab, thus contributing to the bracing of the structure of the work machine cab. The length of the guide bars is determined by the length of the desired linear movement. In the embodiment of the figures, the guide bars extend from the floor of the work machine cab substantially to a window opening 9 to be provided in the side wall 7. Thus it is possible to maximize the light opening of the window, yet providing a sufficient lifting height for the work machine cab.

The guide bars, together with the side wall, define therebetween a channel 10, in which one or more control means 11 are arranged to move. In this preferred embodiment the control means comprises a means that extends substantially throughout the entire height of the side wall 7, whereby a sufficient rigidity is provided also at the extreme end of the vertical lifting movement of the work machine cab.

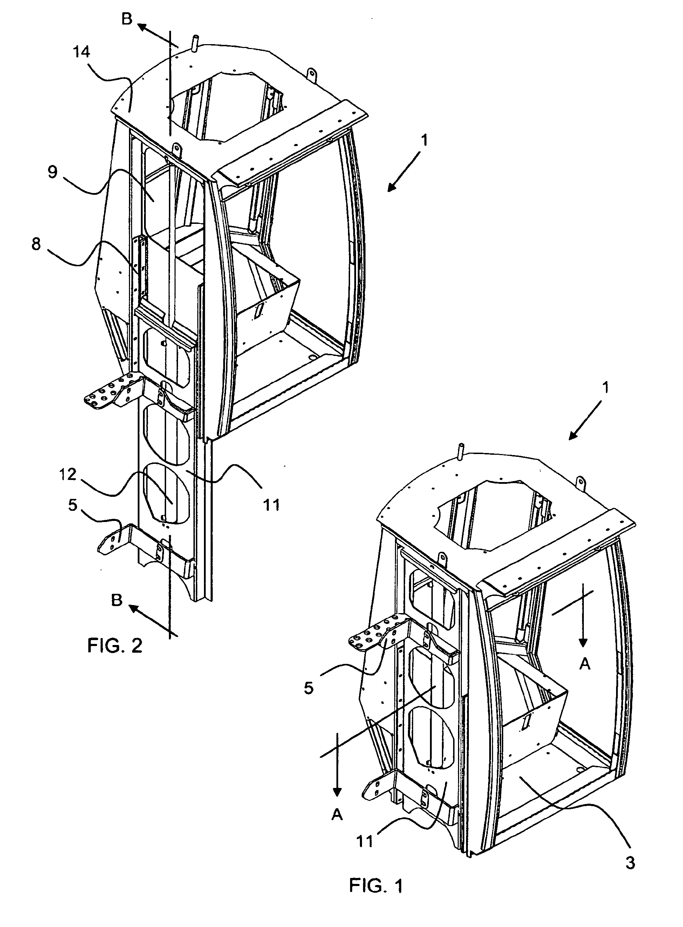

The control means 11 may consist, for instance, of at least one slide connected to the linear guide bar 8, as best appears from Figures 1 and 2. From this slide protrude securing means 5 wherewith the lifting unit 4 and the relating work machine cab 1 are attached to a loader, for instance.

At least one actuator 12, whereby the mutual movement between the control means 11 and the guide bars 8 is provided, is arranged to control the movement of the lifting unit 4. This actuator advantageously comprises a pressure-medium-operated cylinder, and consequently it may be either a hydraulic or a pneumatic cylinder. On the other hand, it is conceivable that the movement of the lifting unit is also produced by an electric motor, in which case the actuator 12 may comprise, for instance, a spindle motor or a step motor. Naturally, the movement of the lifting unit may also be controlled by any systems known per se, which are not specified herein in detail. So, the actuator may control a cable arrangement, which for instance through a tackle arrangement, transfers the movement to the work machine cab.

In the preferred embodiment of the figures, the actuator 12 controlling the movement of the lifting unit 4 extends from the lower edge 13 of the control means 11 in the lifting unit to the roof structures 14 of the work machine cab 1. Even though the figures show that the actuator extends over the window opening 9 of the side wall 7, nothing prevents the lifting unit from being provided with, for instance, two actuators mounted beside the guide bars 8, which actuators are closable in channels arranged in the side wall outside the window opening.

The present work machine cab 1 operates as follows. When the work machine cab 1 is in its lower position as shown in Figure 1, the driver enters the cabin space 3. While in the cabin space, he or she starts the actuator 12 controlling the operation of the lifting unit 4. The actuator moves the work machine cab vertically upwards along the control means 11. As the control means is released from the channel 10 provided in the wall structure 7 of the work machine cab, the lifting-unit-side window opening 9 of the cabin space is cleared at the same time, which permits the driver to have a substantially unlimited visibility in all directions from the cabin space. On reaching its top height, i.e. the working height of the present embodiment locating 1000 to 1500mm higher up, the actuator stops automatically and the lifting unit is locked into place in this upper position. When necessary, the locking may utilize, for instance, gripping means arranged in the slide constituting the control means, which gripping means, through their operation, prevent the cabin space from sliding downwardly.

For instance, once the loading work is completed, the lifting unit 4 is released to operate and the work machine cab 1 is controlled to descend towards its rest position, which is its lower position. The control means 11 is transferred along the guide bars 8 back to the channel 10 in the wall structure, retracting substantially for the entire length into the channel. When substantially the entire length of the control means is retracted in the channel, the driver may step down from the cabin space.

It is apparent to a person skilled in the art that as technology advances, the basic idea of the solution described above may be implemented in a variety of ways. The disclosed solution for the work machine cab and the embodiments thereof are thus not limited to the above examples, but they may vary within the scope of the claims.

## Claims

1. A work machine cab (1) comprising wall, floor and roof structures enclosing a cabin space (3), whereby
the work machine cab may be subjected to a substantially vertical linear movement by a lifting unit (4) associated therewith, which
lifting unit is attached with at least one securing means (5) to a movable or immovable carriage abutting thereto or to a separate structure therein, and
the lifting unit (4) comprises at least one guide bar (8) and at least one actuator (12) so as to move the work machine cab (1), whereas
a side wall (7) abutting to the cabin space (3) of the work machine cab (1) comprises at least one channel (10) such, that
this channel is arranged to receive both said guide bar (8) and one or more control means (11) manoeuvred by the guide bar, whereby
the actuator (12) is arranged to generate a movement between the control means and the guide bar integrated in the side wall with respect to one another,
**characterized in that**
the lifting unit (4) comprises linear guide bars attached to a frame of the side wall (7),
in which linear guide bars there is arranged at least one slide constituting the control means (11), which slide comprises said securing means (5).

2. The work machine cab (1) of claim 1, **characterized in that** the actuator (12) comprises a pressure-medium-operated cylinder.

3. The work machine cab (1) of claim 2, **characterized in that** the actuator (12) comprises a hydraulic cylinder.

4. The work machine cab (1) of claim 1, **characterized in that** the actuator (12) comprises a spindle motor.

5. The work machine cab (1) of any one of claims 1 to 4, **characterized in that** the lifting unit (4) comprises linear guide bars constituting part of the frame of the side wall (7), in which linear guide bars there is arranged at least one slide constituting the control means (11), which slide comprises said securing means (5).

6. The work machine cab (1) of any one of the preceding claims, **characterized in that** the control means (11) extends substantially throughout the entire height of the side wall (7).

7. The work machine cab (1) of claim 6, **characterized in that** in the lifting movement of the work machine cab (1) the control means is arranged to clear the window opening (9) in the side wall (7).

## Patentansprüche

1. Eine Arbeitsmaschinenkabine (1), die Wand-, Boden- und Dachkonstruktionen aufweist, die einen Kabinenraum (3) einschließen, wobei
die Arbeitsmaschinenkabine einer im Wesentlichen vertikalen linearen Bewegung durch eine ihr angeschlossenen Hebeeinheit (4) unterworfen werden kann, wobei
die Hebeeinheit mit mindestens einem Sicherungsmittel (5) an einem beweglichen oder unbeweglichen, an dem Sicherungsmittel oder an einer darin befindlichen separaten Struktur anliegenden Carriage (5) befestigt ist, und
die Hebeeinheit (4) mindestens eine Führungsschiene (8) und mindestens einen Aktor (12) zur Bewegung der Arbeitsmaschinenkabine (1) aufweist, wobei
eine an den Kabinenraum (3) der Arbeitsmaschinenkabine anliegende Seitenwand (7) mindestens einen Kanal (10) derart aufweist, dass
dieser Kanal angeordnet ist, sowohl die erwähnte Führungsschiene (8) als auch eine oder mehrere, von der Führungsschiene maneuvrierte Steuerungseinheiten (11) aufzunehmen, wobei
der Aktor (12) angeordnet ist, eine Bewegung zwischen den Steuerungsmitteln und der Führungsschiene, die in die Seitenwand in Bezug aufeinander integriert sind, zu erzeugen,
**dadurch gekennzeichnet, dass**
die Hebeeinheit (4) lineare, an einen Rahmen der Seitenwand (7) befestigte Führungsschienen aufweist,
in welcher linearen Führungsschiene mindestens ein Träger angeordnet ist, die das Steuerungsmittel (11) ausmacht, welche Bahn die besagten Sicherungsmittel (5) aufweist.

2. Eine Arbeitsmaschinenkabine (1) gemäß dem Patentanspruch 1, **dadurch gekennzeichnet, dass** der Aktor (12) einen Druck-Medium-Zylinder aufweist.

3. Eine Arbeitsmaschinenkabine (1) gemäß dem Patentanspruch 2, **dadurch gekennzeichnet, dass** der Aktor (12) einen Hydraulikzylinder aufweist.

4. Eine Arbeitsmaschinenkabine (1) gemäß dem Patentanspruch 1, **dadurch gekennzeichnet, dass** der Aktor (12) einen Spindelmotor aufweist.

5. Eine Arbeitsmaschinenkabine (1) gemäß einem der Patentansprüche 1 bis 4, **dadurch gekennzeichnet, dass** die Hebeeinheit (4) lineare Führungsschienen, die einen Teil des Rahmens der Seitenwand (7) ausmachen, in welchen linearen Führungsschienen mindestens eine Bahn angeordnet ist, die das Steuerungsmittel (11) ausmacht, welcher Träger die besagten Sicherungsmittel (5) aufweist.

6. Eine Arbeitsmaschinenkabine (1) gemäß einem der vorangehenden Patentansprüche, **dadurch gekennzeichnet, dass** das Steuerungsmittel (11) sich im Wesentlichen über die gesamte Höhe der Seitenwand (7) erstreckt.

7. Eine Arbeitsmaschinenkabine (1) gemäß dem Patentanspruch 6, **dadurch gekennzeichnet, dass** während der Hebebewegung der Arbeitsmaschinenkabine (1) das Steuerungsmittel angeordnet ist, die Fensteröffnung (9) in der Seitenwand (7) zu reinigen.

## Revendications

1. Cabine de machine de travail (1) comprenant des structures de paroi, de plancher et de toit entourant un espace de cabine (3), dans laquelle la cabine de machine de travail peut être soumise à un mouvement linéaire sensiblement vertical par une unité de levage (4) associée à celle-ci, laquelle
unité de levage est fixée, avec au moins un moyen de fixation (5), à un chariot mobile ou immobile contigu à celle-ci ou à une structure séparée dans celle-ci, et
l'unité de levage (4) comprend au moins une barre de guidage (8) et au moins un actionneur (12) afin de déplacer la cabine de machine de travail (1), alors que
une paroi latérale (7) contiguë à l'espace de cabine (3) de la cabine de machine de travail (1) comprend au moins une gorge (10) de sorte que cette gorge soit agencée pour recevoir ladite barre de guidage (8) et un ou plusieurs moyens de commande (11) manoeuvrés par la barre de guidage, dans lequel
l'actionneur (12) est agencé pour générer un mouvement entre les moyens de commande et la barre de guidage intégrée dans la paroi latérale les uns par rapport aux autres,
**caractérisée en ce que**
l'unité de levage (4) comprend des barres de guidage linéaires fixées à un cadre de la paroi latérale (7),
dans lesquelles barres de guidage linéaires est agencé au moins un coulisseau constituant les moyens de commande (11), lequel coulisseau comprend ledit moyen de fixation (5).

2. Cabine de machine de travail (1) selon la revendication 1, **caractérisée en ce que** l'actionneur (12) comprend un vérin actionné par agent sous pression.

3. Cabine de machine de travail (1) selon la revendication 2, **caractérisée en ce que** l'actionneur (12) comprend un vérin hydraulique.

4. Cabine de machine de travail (1) selon la revendication 1, **caractérisée en ce que** l'actionneur (12) comprend un moteur à axe.

5. Cabine de machine de travail (1) selon une quelconque des revendications 1 à 4, **caractérisée en ce que** l'unité de levage (4) comprend des barres de guidage linéaires constituant une partie du cadre de la paroi latérale (7), dans lesquelles barres de guidage linéaires est agencé au moins un coulisseau constituant les moyens de commande (11), lequel coulisseau comprend ledit moyen de fixation (5).

6. Cabine de machine de travail (1) selon une quelconque des revendications précédentes, **caractérisée en ce que** les moyens de commande (11) s'étendent sensiblement sur la hauteur entière de la paroi latérale (7).

7. Cabine de machine de travail (1) selon la revendication 6, **caractérisée en ce que**, dans le mouvement de levage de la cabine de machine de travail (1), les moyens de commande sont agencés pour dégager l'ouverture de fenêtre (9) dans la paroi latérale (7).
